# FASCICULE DE BREVET EUROPEEN

(11) **EP 2 703 298 B1**
(45) Date de publication et mention de la délivrance du brevet: **25.12.2024**
(21) Numéro de dépôt: 13180852.9
(22) Date de dépôt: 19.08.2013
(51) Int. Cl.: B64G 1/36, B64G 7/00, G01C 21/02, G09G 3/36, G09G 3/34

(54) **Dispositif et procédé de stimulation de capteur optoélectronique**
Vorrichtung und Verfahren zur Stimulation eines optoelektronischen Sensors
Device and method for stimulating an optoelectronic sensor

(30) Priorité: 27.08.2012 FR 1202303
(43) Date de publication de la demande: 05.03.2014
(73) Titulaire: Airbus Defence and Space SAS, 31402 Toulouse Cedex 4 (FR)
(72) Inventeur: Vidal, Philippe, 31320 Vieille-Toulouse (FR)
(74) Mandataire: Plasseraud IP

(56) Documents cités:
- FR-A1- 2 816 406
- US-A1- 2005 035 940
- US-A1- 2008 002 101
- US-A1- 2012 212 499

## Description

La présente invention relève du domaine des dispositifs d'affichage d'images monochromes à haute fréquence.

Elle concerne plus particulièrement un dispositif permettant la stimulation de senseurs optiques tels que des senseurs d'étoile ou des caméras embarqués à bord d'engins.

### Préambule et art antérieur

L'utilisation de certains véhicules nécessite la connaissance de leur orientation angulaire et donc l'utilisation de senseurs permettant cette mesure relativement à un repère inertiel généralement lié aux étoiles. C'est notamment le cas des engins spatiaux pour lesquels cette mesure est réalisée par un dispositif connu de l'homme du métier sous le nom de senseur d'étoiles.

Un tel senseur comporte une chaîne optique illuminant une matrice de capteurs électroniques. Il est naturellement souhaitable de pouvoir tester le fonctionnement correct d'un tel senseur optique, tant pour ce qui concerne la chaîne optique que pour la matrice de capteurs électroniques.

A cet effet, il est connu d'utiliser un dispositif d'affichage reproduisant un fond d'étoiles, qui, lorsqu'il est placé en face du senseur d'étoiles, permet de comparer le résultat fourni par le senseur d'étoiles à l'image envoyée en entrée. Un tel dispositif d'affichage ressemble ainsi à un planétarium couvrant le champ de vue du senseur d'étoiles.

Pour un modèle de senseur stellaire donné, le fabricant du senseur stellaire a pour habitude d'établir un catalogue stellaire contenant la liste des étoiles nécessaires au bon fonctionnement du système. On trouve dans cette liste, pour chaque étoile, sa position angulaire (on dira simplement « position ») dans le repère inertiel ainsi qu'une valeur appelée « magnitude instrumentale » correspondant au signal tel qu'il est attendu au niveau du détecteur après que la lumière provenant de l'étoile soit passée au travers de l'optique du senseur.

Un **stimulateur** de senseurs d'étoiles (ou **dispositif de stimulation** dans la suite de la description) est un dispositif de reproduction d'un fond d'étoiles qui permet la mise en oeuvre et le test de senseur d'étoiles avant son utilisation dans des conditions normales devant un ciel réel. On parle communément de « stimulateur optique de senseur d'étoiles » lorsque le stimulateur fournit des images en entrée de la chaîne optique du senseur d'étoiles. On s'intéressera dans toute la suite de l'exposé à ce type de stimulateurs optiques, qui peut également être utilisé pour tester d'autres chaînes optoélectroniques comme celles de caméras panchromatiques utilisées par exemple pour des fonctions de vision et/ou de perception.

Pour faire fonctionner un senseur d'étoiles avec un stimulateur optique, il n'est pas nécessaire de reproduire le spectre (ou la couleur exacte) correspondant à chaque étoile. Ce qui importe est qu'au niveau du senseur, le flux de lumière reçu corresponde au flux attendu relativement à cette étoile, c'est à dire à la magnitude instrumentale telle que définie dans le catalogue stellaire fourni par le fabricant de senseur.

En conséquence, les étoiles simulées par les stimulateurs optiques « classiques » sont généralement monochromes. C'est la raison pour laquelle les images simulées sont généralement calculées avec un niveau de gris associé à chaque pixel et comme les cartes graphiques utilisées pour produire ces images prennent généralement en charge des composantes colorées (RGB), ces trois composantes ont la même valeur.

### Etat de l'art et limitations associées

Jusqu'à présent les senseurs stellaires étaient utilisés sur des plateformes de satellite dont les vitesses de rotation dans un repère inertiel n'allaient pas au-delà de 3 à 5 deg/s. Avec l'avènement des nouvelles plateformes de satellites à fortes vitesses de basculement, les senseurs stellaires ont dû s'adapter pour permettre l'acquisition d'images avec de faibles durées d'intégration et ainsi la production de mesures jusqu'à des vitesses de rotation relativement élevées, typiquement jusqu'à 20 deg/s.

Les stimulateurs optiques d'ancienne génération se sont retrouvés limités, du fait essentiellement de l'effet d'échantillonnage de l'affichage d'image, effet qui est d'autant plus visible au niveau du senseur que la vitesse de défilement de la scène au niveau du stimulateur est élevée et que la durée de prise d'image par le senseur est faible. En effet, à fréquence de stimulation constante, plus la vitesse de défilement est importante, plus les images générées par le stimulateur vont être telles que le déplacement des étoiles d'une image à l'autre est important. Lorsque ce déplacement devient trop important, il arrive que le senseur qui observe les images du stimulateur produise lui-même des images pour lesquelles certaines étoiles apparaissent disjointes. Dans ce cas, les étoiles concernées ne sont plus reconnues et la mesure produite par le senseur devient incorrecte.

La solution à ce problème consiste, lorsque c'est possible, à augmenter la fréquence de calcul et d'affichage des images. Ainsi, à vitesse constante, lorsque la fréquence d'affichage augmente le déplacement entre deux images diminue.

Cependant, pour un afficheur de type microdisplay couleur LCOS et de résolution 1280x1024 pixels qui correspond au besoin de précision de l'image, la fréquence maximale d'affichage des images est aujourd'hui de 85Hz. Cette fréquence permet de stimuler correctement les senseurs stellaires montés sur les plateformes peu agiles mais reste insuffisante pour la stimulation des senseurs stellaires de nouvelle génération qui sont montés sur les nouvelles plateformes à basculement rapide.

### Exposé de l'invention

La présente invention concerne en premier lieu un ensemble selon la revendication 1.

On comprend que les moyens de générer l'image à envoyer comprennent :
- des moyens de calcul, d'au moins deux images monochromes Si correspondant à des dates *tSi* décalées les unes des autres d'une valeur non nulle, pour chaque période d'affichage T,
- des moyens d'affichage séquentiel (c'est à dire à des instants distincts) de ces au moins deux images monochromes sur l'afficheur au cours d'une période T.

Dans un mode de réalisation particulier, les moyens d'affichage séquentiel sont conformes à l'objet de la revendication 2.

On comprend que les moyens d'affichage séquentiel permettent d'effectuer l'affichage des N composantes de couleurs selon un séquencement tel que les N images monochromes sont affichées l'une après l'autre pour chaque période d'affichage T.

Le dispositif comporte, dans un mode de réalisation fournissant des images équitablement décalées dans le temps, des caractéristiques selon la revendication 3.

Les moyens d'affichage séquentiel de ces N images monochromes sur l'afficheur, sont, conformes à l'objet de la revendication 4.

On comprend qu'il s'agit en fait que l'électronique de contrôle d'affichage soit programmée suivant un mode de séquencement particulier qui ne laisse pas de temps mort entre la fin de l'envoi d'une image de base à l'afficheur et le début de la suivante, au contraire de l'art antérieur. L'affichage des images est donc réalisé de façon à remplir au mieux tout le temps d'affichage. Idéalement, l'affichage de chaque image de base a lieu pendant une durée égale à un Nième de période T.

Les images de base (monochromes) sont avantageusement affichées avec le dispositif des stimulation de l'ensemble comportant les caractéristiques de la revendication 5. Cette disposition est favorable à une simplification de la logique d'affichage des images de base, ladite logique étant pilotée par l'électronique de contrôle de l'afficheur.

Le nombre N de couleurs que l'électronique de contrôle de l'afficheur est capable de gérer est avantageusement égal à trois, ce qui est favorable à l'utilisation de composants existants.

Dans un mode particulier de réalisation, l'ensemble comporte les caractéristiques de la revendication 6. Cette disposition permet d'utiliser, pour la réalisation de l'afficheur, un composant d'affichage disponible "sur étagère".

L'afficheur comportant en général trois diodes électroluminescentes permettant l'affichage de trois plans couleurs, dans un mode de réalisation de l'invention permettant une simplification de l'afficheur, les trois diodes électroluminescentes sont remplacées par une seule et même diode.

En d'autres termes, l'ensemble comporte les caractéristiques de la revendication 7.

L'ensemble comporte également, dans un mode réalisation, les caractéristiques de la revendication 8, de façon à minimiser les aberrations chromatiques à travers les optiques.

On comprend qu'il s'agit d'un système de stimulation de capteurs optoélectroniques qui comporte un système d'affichage d'images monochromes utilisant les composantes RGB des images sources couleurs et les fonctions particulières de séquencement d'affichage des plans couleur par un composant d'affichage de type microdisplay, pour faire s'afficher 3 images monochromes de manière séquentielle et régulière au lieu d'une seule image couleur.

La plupart des afficheurs d'images sont aujourd'hui conçus pour permettre l'affichage d'images en couleurs. C'est la raison pour laquelle, lorsque l'on parle d'une fréquence d'affichage des images, cela correspond en pratique à la fréquence d'affichage d'une image couleur.

Ce système de stimulation optique comporte également un générateur d'image dont la fréquence de génération des images est liée à la fréquence de fonctionnement de la carte graphique qui va fournir les données vidéo correspondantes à l'afficheur. Ainsi, pour un générateur d'images classique, la fréquence de génération des images est au plus égale à la fréquence image de l'afficheur.

Ainsi, en prenant l'exemple d'utilisation d'un afficheur de type connu sous le nom générique de microdisplay, pour lequel la fréquence d'affichage des images couleur de résolution 1280 x 1024 est par exemple de 85Hz maximum, la fréquence de génération des images par un générateur d'images classique est limitée à 85Hz.

Ainsi décrite, l'invention permet, par rapport à l'état de l'art présenté précédemment, de faire s'afficher des images monochromes à l'aide d'un afficheur couleur classique à une fréquence trois supérieure à la fréquence maximale théorique d'affichage des images couleurs sur l'afficheur.

L'invention vise à :
1/ Ne plus utiliser des images monochromes comme images sources à afficher (images généralement grises où chaque pixel est associé à trois composantes couleurs identiques) mais des images colorées composées de trois images monochromes superposées. Chacune des trois images monochromes composant l'image couleur doit correspondre respectivement aux plans couleurs rouge, vert et bleu et doit représenter une image du champ de vue à un instant différent, ces instants étant séparé du précédent d'un tiers de période image couleur.
   Chaque sous-image est calculée de manière indépendante des autres en fonction uniquement du contenu de l'image que l'on souhaite au moment de l'affichage sur le microdisplay.
2/ Configurer un afficheur microdisplay de façon à ce qu'il affiche chaque plan couleur de manière séquentielle et que l'affichage de chaque plan couleur de l'image remplisse au mieux un tiers de la période correspondant à l'affichage de l'image couleur.
3/ Remplacer les trois diodes électroluminescentes (LEDs) respectivement rouge, verte et bleue, de l'afficheur microdisplay par une seule et même LED de couleur fixe de façon à ce que l'affichage de chacun des plans couleur restitue la même couleur vue par le senseur.

L'invention vise en second lieu un procédé de stimulation selon la revendication 9.

Dans des mises en oeuvre particulières, éventuellement conjointes, le procédé proposé comporte en outre des caractéristiques selon l'une des revendications 9 à 14.

L'invention vise plus particulièrement un procédé de stimulation d'un capteur optoélectronique tel qu'exposé, comportant en outre les caractéristiques de la revendication 15 (une **scène** étant définie comme une image supposée en vue du senseur à un instant donné).

Dans ce cas, le procédé comporte en outre avantageusement une étape suivante : 100 : choix des dates *tSi* des images monochromes à générer, l'écart entre deux dates successives *tSi* étant sensiblement égal à l'écart entre deux instants *tAi* successifs d'affichage des images monochromes par le dispositif d'affichage.

### Présentation des figures

Les caractéristiques et avantages de l'invention seront mieux appréciés grâce à la description qui suit, description qui expose les caractéristiques de l'invention au travers d'un exemple non limitatif d'application.

La description s'appuie sur les figures annexées qui représentent :
Figure 1 : une représentation schématique des éléments impliqués dans la mise en oeuvre d'un dispositif tel que décrit,
Figure 2 : une séquence d'affichage des composantes colorées sur une période image (60 Hz ; T = 16 666 ns), dans un procédé selon l'art antérieur,
Figure 3 : une séquence d'affichage des composantes colorées sur la même période image dans un procédé selon l'invention,
Figure 4 : un organigramme d'un procédé mettant en oeuvre l'invention.

### Description détaillée d'un mode de réalisation de l'invention

Le dispositif et le procédé de stimulation sont ici décrits dans le cas de la stimulation d'un senseur stellaire, mais s'applique plus généralement à tout autre dispositif de stimulation de capteur optoélectronique mettant en oeuvre des systèmes d'affichage d'images pour lesquels les images finales que l'on souhaite afficher sont monochromes et à fréquences élevées (typiquement supérieures à 150Hz).

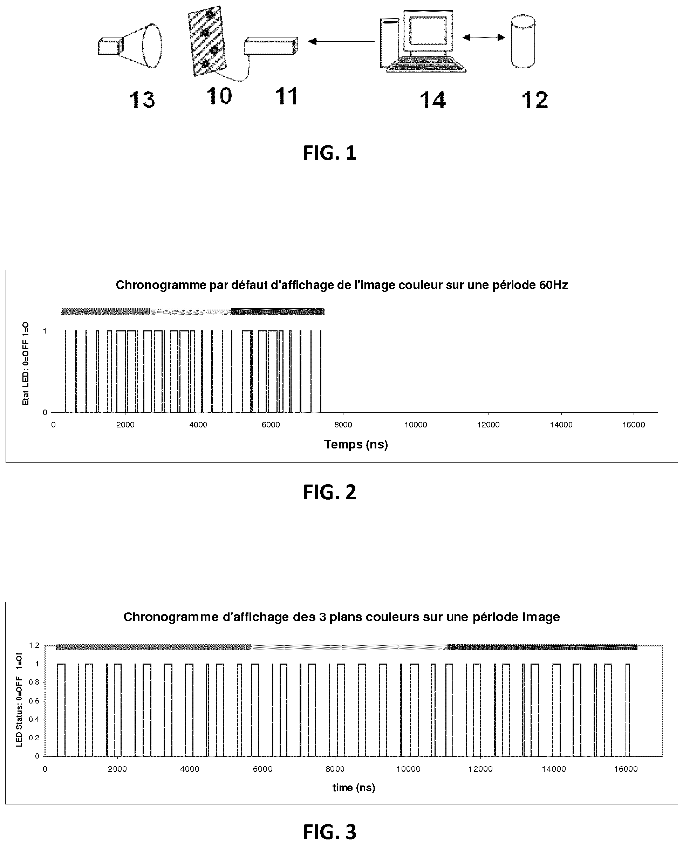

Comme on le voit sur la figure 1, le dispositif de stimulation mis en oeuvre comporte un système de génération d'image et un système d'affichage d'image.

Le système d'affichage d'image comporte un afficheur 10, piloté par une électronique de contrôle 11. En utilisation, un senseur d'étoiles 13 est disposé en vis à vis de l'afficheur.

L'afficheur 10 est de type matriciel, de forme rectangulaire, comportant une matrice de 1280 x 1024 pixels. Le choix de l'afficheur, ici de type LCOS (cristaux liquides sur silicium), est fonction de l'application envisagée.

Dans le présent exemple de réalisation, cet afficheur 10 a été obtenu à partir d'un afficheur comportant initialement trois diodes électroluminescentes rouge, verte et bleue (correspondant à un codage d'image dit RGB). Pour la mise en oeuvre de l'invention, on a remplacé les trois diodes électroluminescentes RGB par une seule diode électroluminescente rouge. Un afficheur comportant initialement des moyens d'affichage en trois couleurs de tout autre type pilotable est également envisageable comme base pour la création d'un afficheur adapté à la mise en oeuvre de l'invention. On peut citer par exemple un dispositif de type DMD (à micro-miroirs), ou tout autre dispositif à cristaux liquides faisant office de miroirs. De même, la source de lumière utilisée (ici une LED rouge) peut aussi être d'un autre type.

Dans le présent exemple de mise en oeuvre, l'afficheur 10 est de type connu sous le nom générique de **"microdisplay",** et permet typiquement d'afficher à 60 Hz des images couleur de résolution 1280 x 1024. On entend par microdisplay un afficheur électronique de très petite taille (typiquement 1 à quelques cm2), utilisé classiquement comme afficheur à très courte distance d'un oeil humain, par exemple dans une application d'affichage tête haute mais aussi dans les appareils de projection. Le microdisplay utilisé ici est particulièrement adapté à l'invention. Il s'agit du modèle SXGA-R5 (marque déposée) fabriqué et commercialisé par la société ForthDD (marque déposée)

L'électronique de contrôle 11 de l'afficheur 10 de type microdisplay, pilote l'état de chacun des pixels de l'image ainsi que l'allumage ou non de chacune des sources de lumière au cours du temps. Une particularité d'un composant d'affichage de type microdisplay est que la fonction de séquencement d'affichage des trois composantes en couleurs de base est telle que l'image couleur est décomposée en trois images monochromes qui sont ensuite affichées l'une après l'autre au cours de la période d'affichage de l'image couleur.

Cette électronique de contrôle 11 est ici de type programmable depuis un ordinateur 14 de type PC, connu en soi, relié à une base de données 12 contenant les paramètres de programmation.

En particulier, il est possible de sélectionner des paramètres spécifiques permettant de programmer les chronogrammes à appliquer pour la mise en oeuvre du dispositif selon l'invention.

Le système de génération d'images utilise une base de données 12 ainsi que l'ordinateur 14 et la carte vidéo de cet ordinateur.

La base de données 12 contient, en plus des paramètres de programmation de l'électronique de contrôle 11, les éléments nécessaires à la génération d'images. Ces éléments sont notamment un catalogue d'étoiles constitué des coordonnées angulaires et des magnitudes instrumentales d'étoiles de la voûte céleste, ainsi qu'un ensemble de données décrivant la position angulaire du senseur d'étoiles à des dates données et qu'on appelle la dynamique du senseur. La dynamique du senseur peut être définie, par exemple, à l'aide de quaternions datés. Cette dynamique permet de calculer à une date donnée la position angulaire des étoiles relativement au senseur 13 dont on connaît l'orientation angulaire inertielle à cette date. La dynamique peut être connue à l'avance et dans ce cas elle est généralement présente dans un fichier de données, ou définie en temps réel durant l'utilisation du stimulateur, à l'aide de commandes qui sont envoyées à l'ordinateur 14 par un utilisateur externe ; dans ce cas les données définissant la dynamique sont stockée temporairement dans une mémoire tampon circulaire de type FIFO située dans la RAM de l'ordinateur 14.

A partir de ces éléments, le logiciel de génération d'images détermine, en appliquant une méthode d'interpolation linéaire, la position des étoiles supposées être dans le champ de vue du senseur 13 aux dates choisies. Ces positions déterminent le contenu de la **"scène"** visible à cet instant par le senseur 13 (une **scène** étant définie comme une image du "ciel" supposé en vue du senseur 13 à un instant donné). A partir de ces positions d'étoiles dans le champ de vue senseur aux instants donnés, le logiciel est capable de calculer, suivant le procédé de l'invention, la valeur des pixels des images couleurs à afficher pour stimuler le senseur suivant la dynamique souhaitée.

Une fois générées, les images couleurs sont copiées dans la mémoire graphique de la carte vidéo de l'ordinateur 14 en vue de leur affichage par des moyens usuels. Cette carte vidéo est réglée de façon à générer et délivrer à la carte électronique 11 qui pilote l'afficheur 10 des images en vraie couleur de manière à assurer un envoi des trois composantes couleurs à la fréquence d'affichage (=1/T) de l'afficheur 10. Il est à noter qu'en général, le réglage par défaut des cartes graphiques est tel que les images sont produites en vraies couleurs à la fréquence de 60Hz. Cependant, la fréquence peut être programmée à des valeurs différentes, en fonction du type d'afficheur, par exemple 60Hz, 75Hz, 85Hz pour le microdisplay SXGA-R5. Dans la suite de l'exposé, nous supposerons que la fréquence est de 60Hz.

Dans une mise en oeuvre plus particulière d'un procédé de stimulation de senseur stellaire utilisant le dispositif suivant l'invention, des positions angulaires du senseur par rapport à la voûte céleste correspondant à une dynamique donnée dudit senseur sont échantillonnées à une fréquence de 128Hz et stockées dans la base de données 12. La fréquence de 128Hz, citée à titre d'exemple, correspond à une fréquence typique d'applications spatiales.

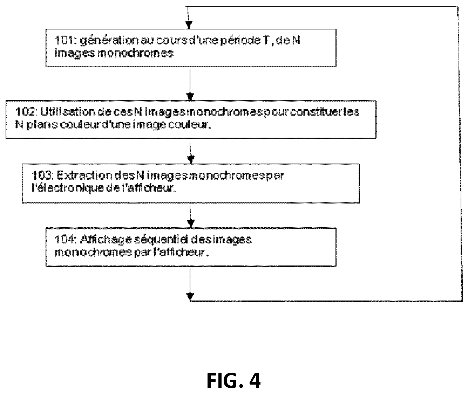

A partir de ces positions angulaires, le logiciel de génération d'images calcule à chaque période T une image couleur constituée de trois images monochromes suivant le procédé détaillé ci-dessous : phase A/ de génération d'images couleurs, étapes 101 et 102 (voir figure 4).

Ensuite, l'image couleur ainsi générée à la fréquence 1/T = 60Hz est émise par la carte graphique et reçue par l'électronique 11 de l'afficheur qui reconstitue les images monochromes suivant l'étape 103. Enfin, l'afficheur 10 affiche les images monochromes de manière séquentielle à une fréquence triple soit 180Hz. Ces étapes de reconstitution et d'affichage des images monochromes sont détaillées ci-dessous : phase B/ d'affichage séquentiel des images monochromes, étapes 103 et 104 (voir figure 4).

Finalement, le procédé constitué des étapes 101, 102, 103, 104 est itéré en retournant à l'étape 101, pour prendre en compte l'écoulement du temps et les nouvelles positions angulaires du senseur.

### A/ Génération des images couleurs

En notant T la période de génération des images couleurs, on identifie dans une première étape 101 les instants t1, t2 = t1+ T/3 et t3 = t2+ T/3 que l'on associe à chacune des trois images monochromes que l'on va générer. Pour chacun de ces instants, on détermine l'attitude associée par interpolation temporelle des données de définition de la dynamique présentes dans la base de données 12. Pour chacune de ces trois attitudes, on détermine, à l'aide du catalogue d'étoile de la base de données 12, la position des étoiles en vue du senseur 13 à cet instant.

Le calcul précis de la valeur de chaque pixel de chacune des trois images monochromes n'est pas détaillé ici. Il consiste à positionner dans l'image des "spots" dont la taille, les niveaux de gris et la position permettent de représenter les positions réelles ainsi que les magnitudes instrumentales des différentes étoiles présentes dans l'image et dont les caractéristiques sont décrites dans le catalogue stellaire de la base de données 12.

Le résultat du calcul de chaque image monochrome est un tableau à deux dimensions dont la taille correspond à une image et dont les éléments sont des pixels dont la valeur est codée avec un nombre de bits qui correspond à la profondeur de codage d'un plan couleur (généralement 8 bits).

En d'autres termes, à la fin de cette étape 101, on dispose de trois images monochromes distinctes correspondant à des instants séparés d'un tiers de période qui ont été générées dans le calculateur 14 et sont stockées en mémoire.

Dans une seconde étape 102, chacune des trois images monochromes produites lors de l'étape 101 est associée à un des trois plans couleurs standards R, G et B correspondants aux composantes rouges, vertes et bleues des pixels d'une image couleur standard. Chaque plan couleur de la nouvelle image couleur ainsi créée correspond alors à une des images monochromes déterminées lors de l'étape 101.

La construction de l'image complète (usuellement en trois couleurs), également réalisée dans l'étape 102, consiste à superposer les trois plans couleurs et à stocker l'image couleur ainsi obtenue dans la mémoire de la carte graphique du calculateur 14. Chaque pixel de l'image couleur (image composite résultante) est ainsi un pixel coloré dont les composantes correspondent aux valeurs de ce même pixel pour chacun des trois plans couleurs donc aux instants t1, t2 et t3 séparés de T/3.

En d'autres termes, lors de l'étape 101, les trois images distinctes monochromes correspondant à des instants séparés d'un tiers de période ont été créées et lors de l'étape 102 ces images sont concaténées sous forme d'une image couleur composite où chaque pixel de l'image composite est composé de 3x8bits où chaque paquet de 8 bits est issu d'une image monochrome.

A l'issue de ces deux étapes l'image couleur est disponible dans la mémoire de la carte graphique du calculateur 14 et est prête à être envoyée vers l'afficheur.

### B/ Affichage séquentiel des images monochromes

Après émission de l'image couleur par la carte graphique du calculateur 14, celle-ci est réceptionnée par l'électronique 11 de l'afficheur. Lors de l'étape 103, cette électronique reconstitue localement en mémoire les différents plans couleurs et donc les différentes images monochromes initialement créées lors de l'étape 101.

De façon connue en soi, l'afficheur microdisplay 10 est conçu pour effectuer un affichage temporel bit par bit de chacun des plans couleurs de chaque pixel suivant un procédé connu sous le nom de TDI (marque déposée) (de l'anglais Time Domain Imaging). Ainsi, tous les bits de même poids d'un même plan couleur sont affichés (ou masqués suivant leur valeur) simultanément. De plus, pour un plan couleur donné, le bit de poids N d'un pixel aura ainsi une durée d'affichage par l'afficheur 10 deux fois plus faible que le bit de poids N+1. Le rendu final de l'intensité lumineuse de chaque pixel de l'image dépend de la rapidité de perception de l'observateur qui est généralement faible en regard de la rapidité d'affichage des images : en pratique le rendu correspond à une sorte de moyenne temporelle au niveau de l'observateur, ce dernier pouvant être un opérateur humain ou le senseur 13.

Un observateur humain standard ne pouvant déceler des changements plus rapides que 20 ms environ, ce calcul de moyenne se fait naturellement dès que l'affichage des images par l'afficheur 10 est supérieur à environ 50Hz.

Pour le senseur 13, les variations d'intensité lumineuse liées au fonctionnement de l'afficheur 10 tel que décrit plus haut sont d'autant moins perceptibles que le temps d**'intégration de l'image** par le senseur 13 (c'est à dire le temps d'acquisition ou de prise d'une image, déterminé par notamment la sensibilité des capteurs et la luminance de la scène) est plus long que la période d'affichage de l'image par l'afficheur 10.

Ainsi, plus le nombre d'images affichées durant le temps d'intégration du senseur est important, meilleure est la qualité du rendu. Pour un senseur de nouvelle génération fonctionnant à fréquence de prise d'images élevée, par exemple 30Hz, on voit qu'avec une fréquence d'affichage image de 75Hz ou même 85Hz, 2 à 3 images seulement s'affichent durant la prise d'image.

Par défaut, l'afficheur microdisplay 10 est programmé (en sortie d'usine) pour afficher une image couleur durant la période T, et ceci avec pour seule contrainte d'avoir terminé l'affichage de toutes les couleurs avant le début de la période d'affichage de l'image suivante.

En illustration de ce type de fonctionnement, la figure 2 montre un exemple de séquence d'affichage par défaut des diodes électroluminescentes (LEDs) de l'afficheur du stimulateur optique sur une période d'image correspondant à une fréquence image de 60Hz (T=16666 ns).

On note que la diode électroluminescente rouge, verte ou bleue s'affiche lorsque la valeur est à 1 et s'éteint lorsque la valeur est à 0.

Il apparaît à l'étude de cette figure que :
- Les chronogrammes d'affichage des plans couleurs R, G et B ne sont pas identiques
- L'affichage n'est effectif que durant la première partie de période. Les LEDs sont éteintes durant toute la seconde partie de période.

Le procédé, tel que décrit ici à titre d'exemple nullement limitatif, définit au contraire, dans l'étape 104, un séquencement d'affichage des trois plans couleurs qui soit avantageusement mais non obligatoirement identique d'un plan couleur à l'autre (même chronogramme pour chaque plan couleur) et de durée la plus proche de T/3.

La figure 3 montre le chronogramme ainsi obtenu après application du nouveau séquencement sur une période de 60Hz.

Afin que les trois images correspondant à l'image colorée soient affichées avec la même couleur, l'ensemble initial de trois LEDs de l'afficheur matriciel 10 est remplacé par une seule LED câblée électriquement sur les voies correspondant initialement à chacune des trois LED. On choisit ici la couleur rouge pour cette LED, cette couleur permet de minimiser les aberrations chromatiques à travers les optiques.

### Avantages

Le procédé permet de multiplier par N la fréquence maximale d'affichage d'images monochromes sur un imageur de type microdisplay conçu pour afficher des images polychromes (RGB).

Avec le développement des nouvelles plateformes agiles pour satellites, la tendance des nouveaux senseurs stellaires est de fournir des mesures à une cadence de plus en plus élevée : 16Hz, 30Hz... En conséquence, si on veut pouvoir stimuler le senseur au sol sans dégradation importante des performances lors de forte dynamiques, il importe que le stimulateur utilisé soit capable lui aussi d'afficher des images simulées à une fréquence suffisamment élevée pour obtenir un bon rendu de la fluidité des mouvements y compris lorsque le temps d'intégration de l'image par le senseur est faible.

La solution exposée plus haut permet de multiplier par trois les fréquences d'affichage traditionnelles. Elle consiste à générer des images en couleurs composées d'une superposition de trois images monochromes correspondantes à des instants différents et à faire s'afficher ces images séquentiellement à l'aide d'un dispositif d'affichage de type Microdisplay.

L'intérêt de l'invention est d'obtenir en final un affichage périodique d'images monochromes (ce qui correspond au besoin du senseur), indépendantes les unes des autres à une fréquence qui soit le triple de la fréquence d'émission des images couleurs par la carte graphique.

En conséquence, le rendu de la dynamique est plus fidèle à la réalité que l'on souhaite imiter car la fréquence effective à l'affichage est trois fois plus élevée que la fréquence de mise à jour des images et trois fois plus élevée que ce qu'elle était avec l'ancien procédé. Ceci autorise des prises d'image avec des temps de pose plus courts (cas d'utilisation de senseurs stellaires de nouvelle génération offrant des fréquences de mesures de l'ordre de 30Hz) et des dynamiques (vitesses de déplacement de la scène) plus importantes.

L'invention trouve des applications partout où les conditions suivantes sont réunies:
- on maîtrise la génération d'images colorées,
- les informations vidéo sont issues d'une carte graphique couleur standard,
- on souhaite afficher des images monochromes à l'aide d'un système d'affichage autorisant en entrée des images polychromes dont les plans couleurs sont affichés de manière séquentielle (par exemple les microdisplays).

Le dispositif et le procédé tels que décrits s'appliquent à la stimulation optique de tous senseurs optiques de type caméra (par exemple, les senseurs d'étoiles mais aussi les caméras de navigation...).

## Revendications

1. Ensemble comportant un senseur d'étoiles (13) en mode de prise d'images d'une scène et un dispositif de stimulation dudit senseur d'étoiles, ce dispositif comportant des moyens d'affichage séquentiel d'images couleurs composés notamment d'un afficheur matriciel (10) et de son électronique de contrôle (11), le senseur d'étoiles étant disposé en vis-à-vis de l'afficheur matriciel, les moyens d'affichage séquentiel d'images couleurs étant adaptés à afficher de manière séquentielle des images couleur composées de N plans monochromes, N étant supérieur ou égal à 2, à une fréquence d'affichage 1/T, T étant la période d'affichage des images couleur, lesdits N plans monochromes d'une image couleur étant affichés séquentiellement durant la période d'affichage T, ledit dispositif de stimulation comportant également des moyens de génération des images couleurs à envoyer aux moyens d'affichage, lesdites images couleurs étant générées à la fréquence d'affichage 1/T, ledit dispositif étant **caractérisé en ce que** :
- les moyens de génération des images couleur sont adaptés à réaliser, entre deux instants d'affichage d'images couleur composées de N plans monochromes, a) la génération de N images monochromes Si successives de ladite scène, lesdites N images monochromes Si représentant ladite scène telle que vue par ledit senseur d'étoiles à des dates *tSi* respectives décalées les unes des autres d'une valeur non nulle, b) le formatage desdites N images monochromes successives en une seule image couleur,
- l'électronique de contrôle dudit afficheur est adaptée pour extraire les N images monochromes à partir de ladite image couleur,
- l'afficheur matriciel est adapté pour réaliser, durant la période d'affichage T, l'affichage séquentiel des N images monochromes ainsi extraites.

2. Ensemble selon la revendication 1, **caractérisé en ce que** les moyens d'affichage séquentiel du dispositif de stimulation sont adaptés à afficher lesdites images monochromes Si à des instants *tAi* décalés sensiblement selon les mêmes valeurs que les dates *tSi* de génération desdites images monochromes.

3. Ensemble selon l'une quelconque des revendications 1 à 2, **caractérisé en ce que** le dispositif de stimulation comporte des moyens de génération de N images monochromes correspondant à N dates décalées d'une même période T/N, ces images représentant ladite scène à des instants différents séparés de T/N.

4. Ensemble selon l'une quelconque des revendications 1 à 3, **caractérisé en ce que** les moyens d'affichage séquentiel desdites images monochromes sur l'afficheur, sont tels que chacune de ces images Si est affichée sans temps mort vis à vis de l'image précédente ou de l'image suivante.

5. Ensemble selon l'une quelconque des revendications 1 à 4, **caractérisé en ce que** dispositif de stimulation comporte des moyens d'affichage des images monochromes selon un même chronogramme d'affichage.

6. Ensemble selon l'une quelconque des revendications 1 à 5, **caractérisé en ce que** l'afficheur (10) est de type appelé "microdisplay".

7. Ensemble selon l'une quelconque des revendications 1 à 6, **caractérisé en ce qu'**une pluralité de signaux électriques de commande de commutation de diodes, issus de l'électronique de contrôle (11), alimentent une même diode électroluminescente, ou plusieurs diodes électroluminescentes de caractéristiques radiométriques identiques.

8. Ensemble selon la revendication 7, **caractérisé en ce que** la (les) diode(s) électroluminescente(s) est (sont) de couleur rouge.

9. Procédé de stimulation d'un senseur d'étoiles (13) en mode de prise d'images d'une scène, le procédé étant mis en oeuvre par un dispositif comportant un afficheur matriciel (10) disposé en vis-à-vis du senseur d'étoiles, ledit afficheur matriciel étant adapté à afficher des images à N plans monochromes avec une fréquence d'affichage 1/T, T étant la période d'affichage des images couleurs, N étant supérieur ou égal à 2, lesdits N plans monochromes d'une image couleur étant affichés séquentiellement durant la période d'affichage T, une électronique de contrôle (11) dudit afficheur (10), des moyens de génération des images couleur à envoyer à l'afficheur (10), lesdites images couleurs étant générées à la fréquence d'affichage 1/T,
ledit procédé étant **caractérisé en ce qu'**il comprend des étapes suivantes :
101 - génération de N images monochromes *Si* successives de la scène, lesdites N images monochromes *Si* représentant ladite scène telle que vue à des dates *tSi* respectives décalés les unes des autres d'une valeur non nulle,
102 - formattage des N images monochromes successives générées à l'étape 101 en une seule image couleur, ladite image couleur étant envoyée aux moyens d'affichage,
103 - extraction de N images monochromes à partir de l'image couleur reçue par les moyens d'affichage,
104 - affichage séquentiel sur l'afficheur matriciel, au cours d'une période T, des N images monochromes extraites à l'étape 103.

10. Procédé de stimulation d'un senseur d'étoiles (13) selon la revendication 9, **caractérisé en ce que** l'affichage desdites images monochromes *Si* est fait à des instants *tAi* décalés sensiblement selon les mêmes valeurs que les dates *tSi* de génération desdites images monochromes.

11. Procédé de stimulation d'un senseur d'étoiles (13) selon l'une quelconque des revendications 9 à 10, **caractérisé en ce que** la génération de N images monochromes est faite de façon à ce que lesdites N images monochromes correspondent à des images de la dite scène à N dates décalées d'une même période T/N.

12. Procédé de stimulation d'un senseur d'étoiles (13) selon l'une quelconque des revendications 9 à 11, **caractérisé en ce que** l'affichage séquentiel de ces N images monochromes Si sur l'afficheur est tel que chacune de ces images Si est affichée sans temps mort vis à vis de l'image précédente ou de l'image suivante.

13. Procédé de stimulation d'un senseur d'étoiles (13) selon l'une quelconque des revendications 9 à 12, **caractérisé en ce que** les images monochromes sont affichées selon un même chronogramme d'affichage.

14. Procédé de stimulation d'un senseur d'étoiles (13) selon l'une quelconque des revendications 9 à 13, **caractérisé en ce que** le nombre N est égal à trois.

15. Procédé de stimulation d'un senseur d'étoiles (13) selon l'une des revendications 9 à 14, **caractérisé en ce que** chacune desdites images monochromes Si représente une scène dont au moins une partie est supposée en vue du capteur (13) respectivement aux dates *tSi.*

## Patentansprüche

1. Anordnung aufweisend einen Sternensensor (13) im Modus zur Aufnahme von Bildern einer Szene und eine Stimulationsvorrichtung zur Stimulation des Sternensensors, wobei diese Vorrichtung Einrichtungen zur sequentiellen Anzeige von Farbbildern aufweist, die insbesondere aus einem Matrix-Anzeigedisplay (10) und seiner Steuerelektronik (11) bestehen, wobei der Sternensensor gegenüber dem Matrix-Anzeigedisplay angeordnet ist, die Einrichtungen zur sequentiellen Anzeige von Farbbildern angepasst sind, um auf sequentielle Weise Farbbilder, die aus N monochromen Ebenen zusammengesetzt sind, mit einer Anzeigefrequenz von 1/T anzuzeigen, wobei N größer oder gleich 2 ist und T die Anzeigeperiode der Farbbilder ist, wobei die N monochromen Ebenen eines Farbbilds sequentiell während der Anzeigeperiode T angezeigt werden, die Stimulationsvorrichtung außerdem Einrichtungen zur Erzeugung der zu den Anzeigeeinrichtungen zu schickenden Farbbilder aufweist, wobei die Farbbilder mit der Anzeigefrequenz 1/T erzeugt werden, wobei die Vorrichtung **dadurch gekennzeichnet ist, dass**:
- die Einrichtungen zur Erzeugung der Farbbilder angepasst sind, um zwischen zwei Zeitpunkten einer Anzeige von Farbbildern, die aus N monochromen Ebenen zusammengesetzt sind, a) die Erzeugung von N aufeinanderfolgenden monochromen Bildern *Si* der Szene durchzuführen, wobei die N monochromen Bilder Si die Szene repräsentieren, wie sie von dem Sternensensor zu jeweiligen Zeiten *tSi* gesehen wird, die um einen Wert von ungleich Null zueinander versetzt sind, b) die Formatierung der N aufeinanderfolgenden monochromen Bilder in ein einziges Farbbild durchzuführen,
- die Steuerelektronik des Anzeigedisplays angepasst ist, um die N monochromen Bilder aus dem Farbbild zu extrahieren,
- das Matrix-Anzeigedisplay angepasst ist, um während der Anzeigeperiode T das sequentielle Anzeigen der auf diese Weise extrahierten N monochromen Bilder durchzuführen.

2. Anordnung nach Anspruch 1, **dadurch gekennzeichnet, dass** die der Stimulationsvorrichtung zugehörigen Einrichtungen zur sequentiellen Anzeige angepasst sind, um die monochromen Bilder *Si* zu Zeitpunkten *tAi* anzuzeigen, die im Wesentlichen gemäß den gleichen Werten zueinander versetzt sind, wie die Erzeugungszeiten *tSi* der monochromen Bilder.

3. Anordnung nach einem der Ansprüche 1 bis 2, **dadurch gekennzeichnet, dass** die Stimulationsvorrichtung Einrichtungen zur Erzeugung von N monochromen Bildern entsprechend zu N Zeiten, die eine gleiche Periode T/N versetzt sind, aufweist, wobei diese Bilder die Szene zu unterschiedlichen Zeitpunkten, die T/N voneinander getrennt sind, repräsentieren.

4. Anordnung nach einem der Ansprüche 1 bis 3, **dadurch gekennzeichnet, dass** die Einrichtungen zur sequentiellen Anzeige der monochromen Bilder auf dem Anzeigedisplay derart sind, dass jedes dieser Bilder Si ohne Totzeit relativ zu dem vorherigen Bild oder dem nachfolgenden Bild angezeigt wird.

5. Anordnung nach einem der Ansprüche 1 bis 4, **dadurch gekennzeichnet, dass** die Stimulationsvorrichtung Einrichtungen zum Anzeigen von monochromen Bildern gemäß einem gleichen Anzeige-Chronogramm aufweisen.

6. Anordnung nach einem der Ansprüche 1 bis 5, **dadurch gekennzeichnet, dass** das Anzeigedisplay (10) vom sogenannten "microdisplay"-Typ ist.

7. Anordnung nach einem der Ansprüche 1 bis 6, **dadurch gekennzeichnet, dass** mehrere von der Steuerelektronik (11) ausgegebene elektrische Steuersignale zur Umschaltung von Dioden eine gleiche Elektrolumineszenz-Diode oder mehrere Elektrolumineszenz-Dioden, die identische radiometrische Charakteristiken haben, versorgen.

8. Anordnung nach Anspruch 7, **dadurch gekennzeichnet, dass** die Elektrolumineszenz-Diode(n) von roter Farbe ist (sind).

9. Verfahren zur Stimulation eines Sternensensors (13) im Modus zur Aufnahme von Bildern einer Szene, wobei das Verfahren von einer Vorrichtung durchgeführt wird, die aufweist: ein gegenüber dem Sternensensor angeordnetes Matrix-Anzeigedisplay (10), wobei das Matrix-Anzeigedisplay angepasst ist, um Bilder (Farbbilder), die aus N monochromen Ebenen zusammengesetzt sind, mit einer Anzeigefrequenz von 1/T anzuzeigen, wobei T die Anzeigeperiode der Farbbilder ist und N größer oder gleich 2 ist, wobei die N monochromen Ebenen eines Farbbilds sequentiell während der Anzeigeperiode T angezeigt werden, eine Steuerelektronik (11) zur Steuerung des Anzeigedisplays (10), Einrichtungen zur Erzeugung der zu dem Anzeigedisplay (10) zu schickenden Farbbilder, wobei die Farbbilder mit der Anzeigefrequenz 1/T erzeugt werden,
wobei das Verfahren **dadurch gekennzeichnet ist, dass** es folgende Schritte aufweist:
101 - Erzeugung von N aufeinanderfolgenden monochromen Bildern *Si* der Szene, wobei die N monochromen Bilder *Si* die Szene repräsentieren, wie sie zu jeweiligen Zeiten *tSi* gesehen wird, die um einen Wert von ungleich Null zueinander versetzt sind,
102 - Formatierung der in dem Schritt 101 erzeugten N aufeinanderfolgenden monochromen Bilder in ein einziges Farbbild, wobei das Farbbild zu den Anzeigeeinrichtungen geschickt wird,
103 - Extraktion von N monochromen Bildern aus dem von den Anzeigeeinrichtungen empfangenen Farbbild,
104 - sequentielles Anzeigen der in dem Schritt 103 extrahierten N monochromen Bilder auf dem Matrix-Anzeigedisplay im Verlaufe einer Periode T.

10. Verfahren zur Stimulation eines Sternensensors (13) nach Anspruch 9, **dadurch gekennzeichnet, dass** das Anzeigen der monochromen Bilder *Si* zu Zeitpunkten *tAi* erfolgt, die im Wesentlichen gemäß den gleichen Werten zueinander versetzt sind, wie die Erzeugungszeiten *tSi* der monochromen Bilder.

11. Verfahren zur Stimulation eines Sternensensors (13) nach einem der Ansprüche 9 bis 10, **dadurch gekennzeichnet, dass** die Erzeugung von N monochromen Bildern auf eine Weise erfolgt, dass die N monochromen Bilder Bildern der Szene zu N Zeiten, die eine gleiche Periode T/N zueinander versetzt sind, entsprechen.

12. Verfahren zur Stimulation eines Sternensensors (13) nach einem der Ansprüche 9 bis 11, **dadurch gekennzeichnet, dass** das sequentielle Anzeigen dieser N monochromen Bilder *Si* auf dem Anzeigedisplay derart ist, dass jedes dieser Bilder *Si* ohne Totzeit relativ zu dem vorherigen Bild oder dem nachfolgenden Bild angezeigt wird.

13. Verfahren zur Stimulation eines Sternensensors (13) nach einem der Ansprüche 9 bis 12, **dadurch gekennzeichnet, dass** die monochromen Bilder gemäß einem gleichen Anzeige-Chronogramm angezeigt werden.

14. Verfahren zur Stimulation eines Sternensensors (13) nach einem der Ansprüche 9 bis 13, **dadurch gekennzeichnet, dass** die Anzahl N gleich drei ist.

15. Verfahren zur Stimulation eines Sternensensors (13) nach einem der Ansprüche 9 bis 14, **dadurch gekennzeichnet, dass** jedes der monochromen Bilder *Si* eine Szene repräsentiert, mindestens ein Teil derer jeweils zu den Zeiten *tSi* voraussichtlich im Blickfeld des Detektors (13) ist.

## Claims

1. An assembly including a star sensor (13) in scene image capture mode and a device for stimulating said star sensor, this device including means for sequentially displaying colour images composed in particular of a matrix display (10) and the control electronics (11) thereof, the star sensor being disposed opposite to the matrix display, the means for sequentially displaying colour images being adapted to sequentially display colour images composed of N monochrome planes, N being greater than or equal to 2, at a display frequency 1/T, T being the display period of the colour images, said N monochrome planes of a colour image being displayed sequentially during the display period T, said stimulation device also including means for generating colour images to be sent to the display means, said colour images being generated at the display frequency 1/T, said device being **characterised in that**:
- the means for generating colour images are adapted to carry out, between two instances of display of colour images composed of N monochrome planes, a) the generation of N successive monochrome images *Si* of said scene, said N monochrome images Si representing said scene as seen by said star sensor at respective dates *tSi* offset from each other by a non-zero value, b) the formatting of said N successive monochrome images into a single colour image,
- the control electronics of said display are adapted to extract the N monochrome images from said colour image,
- the matrix display is adapted to carry out, during the display period T, the sequential display of the N monochrome images thus extracted.

2. The assembly according to claim 1, **characterised in that** the sequential display means of the stimulation device are adapted to display said monochrome images *Si* at times *tAi* substantially offset by the same values as the dates *tSi* of generation of said monochrome images.

3. The assembly according to any one of claims 1 to 2, **characterised in that** the stimulation device includes means for generating N monochrome images corresponding to N dates offset by the same period T/N, these images representing said scene at different times separated by T/N.

4. The assembly according to any one of claims 1 to 3, **characterised in that** the means for sequentially displaying said monochrome images on the display are such that each of these images Si is displayed without any dead time relative to the previous image or the following image.

5. The assembly according to any one of claims 1 to 4, **characterised in that** the stimulation device includes means for displaying the monochrome images according to the same display timing diagram.

6. The assembly according to any one of claims 1 to 5, **characterised in that** the display (10) is of the type called "microdisplay".

7. The assembly according to any one of claims 1 to 6, **characterised in that** a plurality of electrical diode switching control signals, originating from the control electronics (11), supply the same light-emitting diode, or several light-emitting diodes, with identical radiometric characteristics.

8. The assembly according to claim 7, **characterised in that** the light-emitting diode(s) is (are) red in colour.

9. A method for stimulating a star sensor (13) in scene image capture mode, the method being implemented by a device including a matrix display (10) disposed opposite to the star sensor, said matrix display being adapted to display images with N monochrome planes with a display frequency 1/T, T being the period of display of the colour images, N being greater than or equal to 2, said N monochrome planes of a colour image being sequentially displayed during the display period T, control electronics (11) of said display (10), means for generating colour images to be sent to the display (10), said colour images being generated at the display frequency 1/T, said method being **characterised in that** it comprises the following steps:
101 - generating N successive monochrome images Si of the scene, said N monochrome images *Si* representing said scene as seen on respective dates *tSi* offset from each other by a non-zero value,
102 - formatting the N successive monochrome images generated in step 101 into a single colour image, said colour image being sent to the display means,
103 - extracting N monochrome images from the colour image received by the display means,
104 - sequentially displaying, during a period T, the N monochrome images extracted in step 103 on the matrix display.

10. The method for stimulating a star sensor (13) according to claim 9, **characterised in that** the display of said monochrome images Si is done at times *tAi* substantially offset by the same values as the dates *tSi* of generation of said monochrome images.

11. The method for stimulating a star sensor (13) according to any one of claims 9 to 10, **characterised in that** the generation of N monochrome images is done so that said N monochrome images correspond to images of said scene at N dates offset by the same T/N period.

12. The method for stimulating a star sensor (13) according to any one of claims 9 to 11, **characterised in that** the sequential display of these N monochrome images *Si* on the display is such that each of these images *Si* is displayed without dead time relative to the previous image or the following image.

13. The method for stimulating a star sensor (13) according to any one of claims 9 to 12, **characterised in that** the monochrome images are displayed according to the same display timing diagram.

14. The method for stimulating a star sensor (13) according to any one of claims 9 to 13, **characterised in that** the number N is equal to three.

15. The method for stimulating a star sensor (13) according to any one of claims 9 to 14, **characterised in that** each of said monochrome images Si represents a scene of which at least one portion is assumed to be in view of the sensor (13) respectively at the dates *tSi.*
